Europäisches Patentamt

European Patent Office

Office européen des brevets

(11) Publication number: **0 583 720 A2**

# EUROPEAN PATENT APPLICATION

(21) Application number: **93112803.7**

(22) Date of filing: **10.08.93**

(51) Int. Cl.5: **G11B 11/10**

(30) Priority: **18.08.92 JP 219379/92**

(43) Date of publication of application:
**23.02.94 Bulletin 94/08**

(84) Designated Contracting States:
**DE FR GB**

(71) Applicant: **SONY CORPORATION**
**7-35 Kitashinagawa 6-chome**
**Shinagawa-ku**
**Tokyo 141(JP)**

(72) Inventor: **Ohta, Masumi, c/o SONY**
**CORPORATION**

**7-35 Kitashinagawa 6-chome,**
**Shinagawa-ku**
**Tokyo(JP)**
Inventor: **Katsuhisa Aratani, c/o SONY**
**CORPORATION**
**7-35 Kitashinagawa 6-chome,**
**Shinagawa-ku**
**Tokyo(JP)**

(74) Representative: **TER MEER - MÜLLER -**
**STEINMEISTER & PARTNER**
**Mauerkircherstrasse 45**
**D-81679 München (DE)**

(54) **Magnetooptical recording medium.**

(57) A magnetooptical recording medium reproduces recorded information with high resolution using a magnetic layer of multilayer structure and also can record and reproduce information through a high-frequency magnetic-field-modulated process while suppressing a magnetic field required to record information. The magnetooptical recording medium comprises a reproducing layer, a recording layer, and a switching layer interposed therebetween. Information can be recorded in the recording layer by modulating a magnetic field applied thereto and can be reproduced from the recording layer by varying magnetization of the reproducing layer. The reproducing layer is primarily made of GdFeCo and has saturation magnetization Ms1 smaller than 150 emu/cc if TM-rich at room temperature and smaller than 160 emu/cc if RE-rich at room temperature. The switching layer is primarily made of TbFeCo and has a Curie temperature ranging from 60°C to 200°C and lower than Curie temperatures of the reproducing and recording layers. The recording layer is primarily made of TbFeCo and has saturation magnetization Ms3 smaller than 100 emu/cc if TM-rich at room temperature and smaller than 160 emu/cc if in RE-rich at room temperature. The recording layer is RE-rich when the reproducing layer is TM-rich. The difference Ms1 - Ms3 between the saturation magnetization Ms1 and the saturation magnetization Ms3 is 40 emu/cc or less.

FIG. 2

BACKGROUND OF THE INVENTION

Field of the Invention:

The present invention relates to a magnetooptical recording medium from which information bits or magnetic domains can be read on the basis of the magnetooptical effect, and more particularly to a magnetooptical recording medium which is capable of reproducing recorded information with high resolution through the use of a magnetic layer of multi-layer structure and also of recording and reproducing information through a high-frequency magnetic-field- modulated process while suppressing a magnetic field required to record information.

Description of the Prior Art:

Magnetooptical recording is a process of recording information in a magnetic layer by heating a local region of the magnetic layer to the Curie temperature or compensation temperature to extinguish the coercive force of the heated region, and then reversing the direction of magnetization in the heated region into conformity with the direction of an externally applied magnetic field. To read the recorded information, a laser beam is applied to locally heat the magnetic layer for reading the magnetization-reversed region or information bit based on a magnetooptical interaction known as the Kerr effect or Faraday effect.

The bit period which represents a limitation on the reproduction of the recorded information is determined by $f = \lambda/2NA$ where $\lambda$ is the wavelength of the laser beam applied when recorded information is reproduced and NA is the numerical aperture of an objective through which the laser beam is applied to the magnetic layer. To achieve a higher recording density on the magnetooptical recording medium, it may be effective to shorten the wavelength $\lambda$ of the laser beam use to read recorded information and increase the numerical aperture NA of the objective. However, the present technology poses certain limitations on efforts to shorten the wavelength $\lambda$ and increase the numerical aperture NA.

One method of increasing the resolution beyond such limitations, i.e., achieving so-called super-resolution, is disclosed in Japanese laid-open patent publication No. 1-143042 which corresponds to EPO318925A. The disclosed method employs a magnetooptical recording medium of multilayer structure comprising a reproducing layer, a switching layer, and a recording layer which are successively magnetically coupled at room temperature. For readout of recorded information, magnetic domains are temporarily extinguished or shrunk in a high-temperature region that is produced within a reproducing laser beam spot, generating information-bearing magnetic domains only in a low-temperature region which will be read. The recording density is increased by thus increasing the resolution upon reproduction of recorded information.

To rewrite information on the magnetooptical recording medium to which the above reproducing process is applied, it is customary to employ a conventional rewriting process, known as optical modulation recording, of erasing the previously recorded information from the magnetooptical recording medium and then recording new information on the magnetooptical recording medium. However, the conventional rewriting process is disadvantageous in that the step of erasing the previously recorded information is time-consuming.

One generally known process which is free of the erasing step is a magnetic-field-modulated recording overwrite process for modulating a magnetic field according to information be recorded.

According to the magnetic-field-modulated recording overwrite process, a laser beam is emitted in an DC fashion or in synchronism with a clock frequency irrespective of a recording signal and applied to a region of a magnetooptical recording medium making the region capable of recording information at all times. A recording medium field which is applied to the magnetooptical recording medium is varied in conformity with the recording signal for thereby writing information on the magnetooptical recording medium. The magnetic-field-modulated recording overwrite process allows new information to be recorded on the magnetooptical recording medium regardless of any information that has been recorded prior to the recording of the new information.

Japanese laid-open patent publication No. 4-229432 corresponding to EPO492553A discloses a magnetooptical recording medium capable of recording information at high density. The disclosed magnetooptical recording medium comprises a light transmissive substrate of glass or polycarbonate, a dielectric film of SiN or the like having a thickness of 800 Å, for example, deposited on the light transmissive substrate by sputtering or the like, a magnetooptical recording layer deposited on the dielectric film by sputtering or the like, and a protective film of SiN or the like having a thickness of 800 Å, for example, deposited on the magnetooptical recording layer by sputtering or the like. The magnetooptical recording layer comprises a reproducing layer, a switching layer, and a recording layer which are successively deposited by sputtering or the like.

Forces that are applied and affect the magnetooptical recording medium when information is recorded thereon include a force in an externally applied recording magnetic field, a force in a counter magnetic field produced by magnetization of the magnetic layer itself, and a force due to an interface wall energy. When the total of these forces exceeds a coercive force of the magnetic layer in a region of thereof, the magnetization of the region of the magnetic layer is reversed, thereby recording information therein.

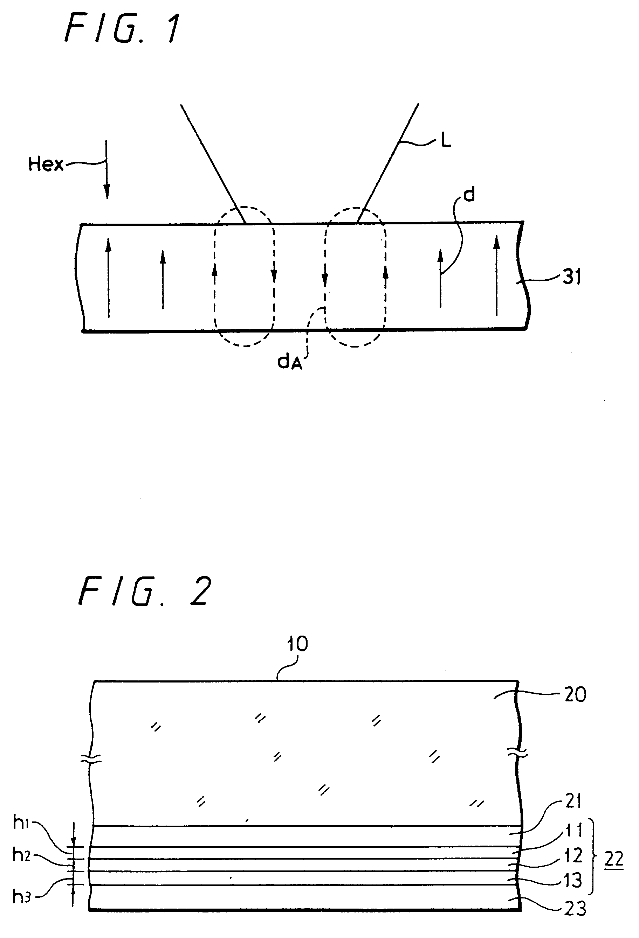

Magnetooptical recording of information in a single magnetic layer will be described below with reference to FIG. 1 of the accompanying drawings. As shown in FIG. 1, the counter magnetic field is generated by magnetization indicated by the arrows $d$ in a magnetic layer 31. The counter magnetic field is of a magnitude substantially proportional to saturation magnetization Ms, and acts in a direction to reverse the direction of magnetization an adjacent region as indicated by the broken line dA. In the case where directions of magnetization are aligned uniformly, a counter magnetic field is generated in a direction to assist in a recording magnetic field indicated by the arrow Hex at a temperature close to the recording temperature if the magnetic layer is of a transition metal sublattice dominant state, i.e., TM-rich, and a counter magnetic field is generated in an opposite direction if the magnetic layer is of a rare earth sublattice dominant state, i.e., RE-rich.

The interface wall energy increases in proportion to the area of an information pit, and always acts in a direction to reduce the area of the information pit, i.e., in a direction to prevent recording. The interface wall energy is determined substantially depending on the material used.

If the total magnetic field composed of the counter magnetic field, the interface wall energy, and the recording magnetic field is directed in the recording direction in the entire region of the recording pit, then it is possible to record information with sufficiently stable carrier and noise. If, however, the total magnetic field acts in a direction to prevent information from being recorded in the entire recordable temperature region, then nothing will be recorded in the magnetic layer even when the temperature rises upon application of a recording laser beam.

Since the counter magnetic field is substantially proportional to the magnitude of magnetization, the counter magnetic field varies in a local area when the magnetization varies in a local area due to a temperature gradient in the laser beam spot. When the counter magnetic field varies in the local area, a region in which a force in a recording direction is stronger and a region in which a force in an erasing direction is stronger are produced in a pit where information is recorded, resulting in recording irregularities. Such recording irregularities are responsible for noise in a reproduced output signal and a reduction of a carrier. Therefore, the recording magnetic field has to be greater than a magnetic field that the magnetooptical recording medium itself has within an area where information is to be recorded.

In the case where information is to be recorded by the magnetic-field-modulated recording, it is necessary that the magnetic field be in the range of from 100 to 2000 Oe in view of the fact that the recording frequency is of as high as several MHz and the modulated magnetic field affects other circuits. If the recording frequency is of about 10 MHz, for example, the recording magnetic field must be reduced to 1500 Oe or below. However, for the reasons described above, no sufficient reproduced output signal may be available if the recording magnetic field is reduced.

OBJECTS AND SUMMARY OF THE INVENTION

It is an object of the present invention to provide a magnetooptical recording medium which can reproduce recorded information with high resolution through the use of a magnetic layer of multilayer structure and also can record and reproduce information through a high-frequency magnetic-field-modulated process while suppressing a magnetic field required to record information.

According to the present invention, there is provided a magnetooptical recording medium comprising a reproducing layer, a recording layer, and a switching layer interposed between the reproducing layer and the recording layer. Information can be recorded in the recording layer by modulating a magnetic field applied thereto and can be reproduced from the recording layer by varying magnetization of the reproducing layer. The reproducing layer is primarily made of GdFeCo and has saturation magnetization Ms1 which is smaller than 150 emu/cc if the reproducing layer is in a transition metal sublattice dominant state at room temperature and smaller than 160 emu/cc if the reproducing layer is in a rare earth sublattice dominant state at room temperature. The switching layer is primarily made of TbFeCo and has a Curie temperature ranging from 60°C to 200°C and lower than Curie temperatures of the reproducing and recording layers. The recording layer is primarily made of TbFeCo and has saturation magnetization Ms3 which is smaller than 100 emu/cc if the recording layer is in a transition metal sublattice dominant state at room temperature

3

and smaller than 160 emu/cc if the recording layer is in a rare earth sublattice dominant state at room temperature. The recording layer is in a rare earth sublattice dominant state when the reproducing layer is in a transition metal sublattice dominant state. The difference Ms1 - Ms3 between the saturation magnetization Ms1 of the reproducing layer and the saturation magnetization Ms3 of the recording layer being 40 emu/cc or less.

The switching layer has saturation magnetization Ms2 which is smaller than 300 emu/cc if the switching layer is in a transition metal sublattice dominant state at room temperature and smaller than 160 emu/cc if the switching layer is in a rare earth sublattice dominant state at room temperature.

The reproducing layer may have a thickness ranging from 150 Å to 1000 Å.

The switching layer may have a thickness ranging from 50 Å to 1000 Å.

The recording layer may have a thickness ranging from 200 Å to 1000 Å.

The Curie temperature of the reproducing layer may range from 200°C to 400°C.

The Curie temperature of the recording layer may range from 150°C to 250°C.

The reproducing layer may have a composition represented by $Gd_x$ $(Fe85Co15)_{100-x}$ with Gd having a content x in the range of $19 \leq x \leq 29$ (atomic %).

The recording layer may have a composition represented by $Tb_y$ $(Fe85Co15)_{100-y}$ with Tb having a content y in the range of $16 \leq x \leq 30$ (atomic %).

When information is recorded on the magnetooptical recording medium, the recording temperature is determined depending on the Curie temperature of the recording layer. The switching layer has almost no effect on the recording of the information because the temperature of the switching layer is higher than the Curie temperature at the recording temperature. Recording conditions are determined basically by the effect of magnetization of the reproducing layer whose Curie temperature is higher than that of the recording layer, a counter magnetic field due to magnetization of the recording layer itself, an interface wall energy of the recording layer, and an externally applied magnetic field.

With the arrangement of the present invention, the reproducing and recording layers are magnetized in patterns not to obstruct a recording magnetic field. The magnetooptical recording medium according to the present invention makes it possible to overwrite recorded information according to the magnetic-field-modulated recording process.

The above and other objects, features, and advantages of the present invention will become apparent from the following description of an illustrative embodiment thereof to be read in conjunction with the accompanying drawings, in which like reference numerals represent the same or similar objects.

BRIEF DESCRIPTION OF THE DRAWINGS

FIG. 1 is a schematic fragmentary view showing the manner in which information is magnetooptically recorded in a single magnetic layer;

FIG. 2 is an enlarged fragmentary cross-sectional view of a magnetooptical recording medium according to the present invention;

FIGS. 3A through 3C are schematic views showing various modes of magnetization of the magnetooptical recording medium according to the present invention;

FIG. 4 is a schematic perspective view of a magnetooptical recording and reproducing apparatus;

FIG. 5 is a diagram showing the relationship between the composition of a reproducing layer and a carrier-to-noise ratio;

FIG. 6 is a diagram showing the relationship between the composition of a recording layer and a carrier-to-noise ratio; and

FIG. 7 is a diagram showing the relationship between a recording magnetic field, a carrier, and noise.

DETAILED DESCRIPTION OF THE PREFERRED EMBODIMENT

As shown in FIG. 2, a magnetooptical recording medium 10 according to the present invention comprises a light transmissive substrate 20 of glass or polycarbonate, a dielectric film 21 of SiN or the like having a thickness of 800 Å, for example, deposited on the light transmissive substrate 20 by sputtering or the like, a magnetooptical recording layer 22 deposited-on the dielectric film 21 by sputtering or the like, and a protective film 23 of SiN or the like having a thickness of 800 Å, for example, deposited on the magnetooptical recording layer 22 by sputtering or the like. The magnetooptical recording layer 22 comprises a reproducing layer 11, a switching layer 12, and a recording layer 13 which are arranged in the order named from the dielectric film 21 and successively deposited by sputtering or the like.

4

The reproducing layer 11 has a composition represented by Gdx (Fe85Co15) 100-x, for example, and has a thickness h1 in the range of from 150 Å to 1500 Å. With the thickness h1 ranging from 150 to 1500 Å, a sufficient Kerr angle $\theta$K is obtained for reproducing recorded information, and the power of a reproducing laser beam required to achieve a desired temperature distribution is not too high.

The Curie temperature Tc1 of the reproducing layer 11 is selected so as not to allow the Kerr angle $\theta$K to decrease due to a temperature rise caused by the laser beam applied for reproducing recorded information, i.e., is selected to be of about 200°C or higher functionally. Since it is virtually difficult to raise the Curie temperature Tc1 higher than 400°C, the Curie temperature Tc1 is selected to be in the range of from 200°C to 400°C.

The saturation magnetization Ms1 of the reproducing layer 11 is in the range of 0 < Ms1 < 150 emu/cc if the reproducing layer 11 is TM-rich at room temperature, and in the range of 0 < Ms1 < 160 emu/cc if the reproducing layer 11 is RE-rich.

The switching layer 12 has a composition represented by TeFeCo. The Curie temperature Tc2 of the switching layer 12 is selected to be in the range of from 60°C to 200°C in order to produce a practical reproducing power. The saturation magnetization Ms2 of the switching layer 12 is in the range of 0 < Ms2 < 300 emu/cc if the switching layer 12 is TM-rich, and in the range of 0 < Ms2 < 160 emu/cc if the switching layer 12 is RE-rich. The switching layer 12 has a thickness h2 of 50 Å or greater in order to separate the reproducing layer 11 and the recording layer 13 fully from each other. The thickness h2 is of at most 1000 Å or less in order to suppress the recording laser beam power.

The recording layer 13 has a composition represented by Tby (Fe85Co15) 100-y. The saturation magnetization Ms3 of the recording layer 13 is in the range of 0 < Ms3 < 100 emu/cc if the recording layer 13 is TM-rich, and in the range of 0 < Ms3 < 160 emu/cc if the recording layer 13 is RE-rich. The thickness h3 of the recording layer 13 may be of 200 Å or greater unless it affects the recording and reproducing sensitivities. In view of the recording power and other factors, the thickness h3 is of at most 1000 Å. The Curie temperature Tc3 of the recording layer 13 is selected to be in the range of from 150°C to 250°C.

The above values of the saturation magnetization are given at room temperature.

As described above, each of the reproducing layer 11, the switching layer 12, and the recording layer 13, i.e., the magnetic layers of the magnetooptical recording layer 22, is made of a compound of rare-earth-transition metals or an RE-TM alloy, and has sublattice magnetization. Depending on the temperature, these magnetic layers change from the transition metal sublattice dominant state (TM-rich) to the rare earth sublattice dominant state (RE-rich) or vice versa. The magnitude and direction of the magnetization of each of the magnetic layers vary depending on the temperature.

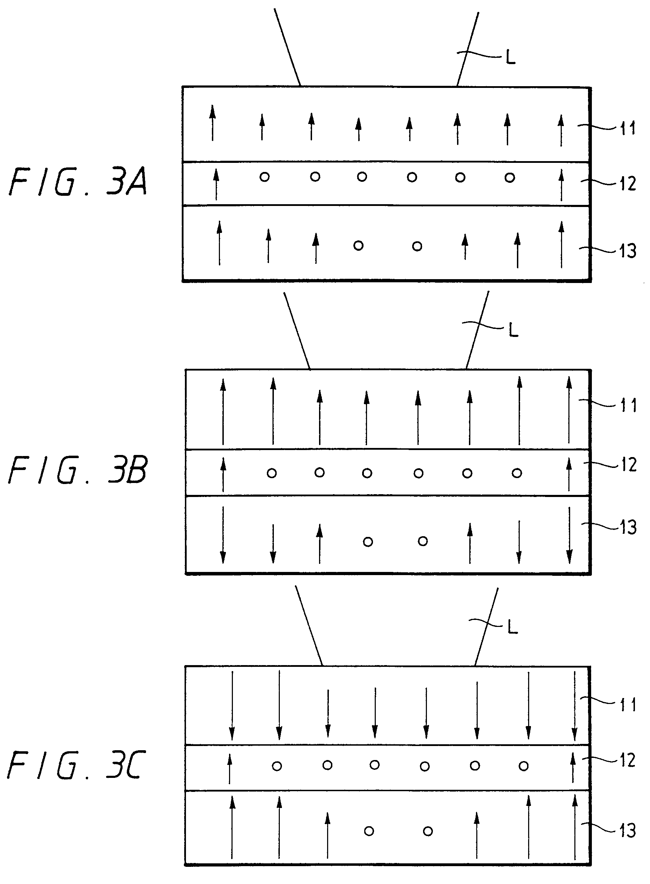

FIGS. 3A through 3C schematically show how a region irradiated with a recording laser beam L is magnetized when the magnitude and direction of magnetization of each magnetic layer are varied. The magnetization of the transition metal sublattice dominant state is indicated by upward arrows, the magnetization of the rare earth sublattice dominant state is indicated by downward arrows, and no magnetization is indicated by a small circle. The magnitude of magnetization is proportional to the length of the arrow.

If the saturation magnetization in the reproducing layer 11 and the recording layer 13 is small, then since a magnetic field generated in the layers is small as shown in FIG. 3A, recorded information can sufficiently be erased even when an externally applied magnetic field is small. If the reproducing layer 11 is TM-rich at both room and recording temperatures, and its magnetization is relatively large as shown in FIG. 3B, then insofar as the recording layer 13 is RE-rich at room temperature, the magnetization in the recording layer 13 outside of the recording spot is opposite to the magnetization in the reproducing layer 11. Therefore, the counter magnetic field in the recording spot is reduced , making it possible to reduce any effect of the magnetization in the reproducing layer 11, so that recorded information can be erased in a low magnetic field. If the recording layer 13 is TM-rich and its magnetization is relatively large as shown in FIG. 3C, then the total effect of the magnetization can be minimized by making the reproducing layer 11 RE-rich and its magnetization act in the opposite direction to the magnetization of the recording layer 13.

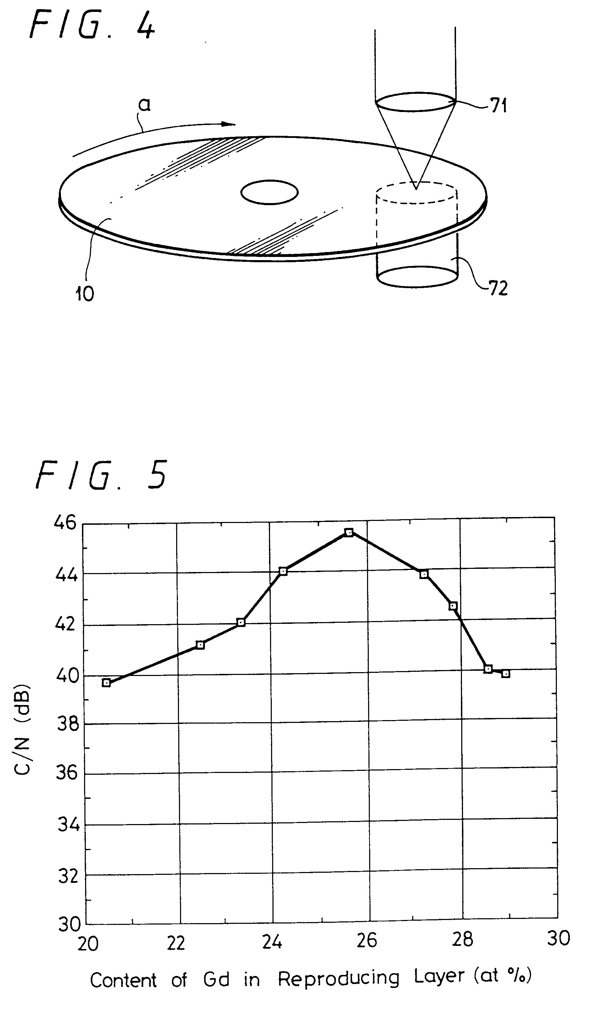

FIG. 4 schematically shows a magnetooptical recording and reproducing apparatus for measuring a magnetic field required to record information on the magnetooptical recording medium 10 for evaluating the magnetooptical recording medium 10. In FIG. 4, the magnetooptical recording medium 10 is rotated about its own axis in the direction indicated by the arrow *a*, and a laser beam L which is focused by an objective 71 is applied to a certain region on the surface of the magnetooptical recording medium 10. At the same time, a recording magnetic field, a reproducing magnetic field, or an erasing magnetic field is applied to the magnetooptical recording medium 10 by a magnetic field generator 72 to record, reproduce, or erase information.

Using the magnetooptical recording and reproducing apparatus shown in FIG. 4, information was recorded on the magnetooptical recording medium 10 while the magnetooptical recording medium 10 was being rotated at 2400 rpm with a linear speed of 8 m/s, a signal frequency f of 10 MHz, a pitch of 0.8 $\mu$m, and a pit length of 0.4 $\mu$m. Then, as disclosed in Japanese laid-open patent publication No. 1-143042 and Japanese patent application No. 2-415025, the recorded information was reproduced by a super-resolution reproducing process which masks pits recorded in a high-temperature region in a reproducing beam spot by extinguishing or erasing the recorded pits, and reads only pits recorded in a relatively low-temperature region in the reproducing beam spot, and a C/N (carrier-to-noise) ratio was measured.

FIG. 5 shows the C/N ratio as it varies when the content x of Gd in the reproducing layer 11 is varied. It can be seen from FIG. 5 that a C/N ratio of 40 dB or higher can be achieved if the reproducing layer 11 contains Gd in the range of $19 \leqq x \leqq 29$ (atomic %).

This composition range of Gd corresponds to a saturation magnetization range of $0 < Ms1 < 240$ emu/cc if the reproducing layer 11 is TM-rich at room temperature, and to a saturation magnetization range of $0 < Ms1 < 160$ emu/cc if the reproducing layer 11 is RE-rich at room temperature.

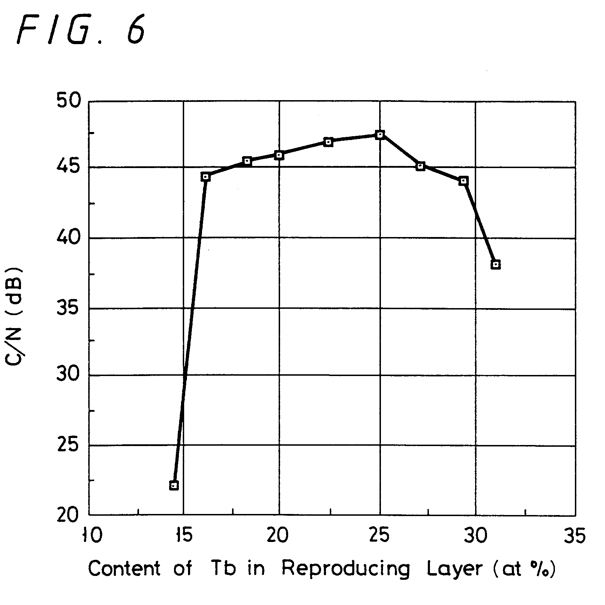

FIG. 6 shows the manner in which the C/N ratio varies when the content y of Tb in Tby (Fe85Co15)100-y of the recording layer 13 is varied. It can be understood from FIG. 6 that a C/N ratio of 40 dB or higher can be achieved if the recording layer 13 contains Tb in the range of $16 \leqq x \leqq 30$ (atomic %).

This composition range of Tb corresponds to a saturation magnetization range of $0 < Ms3 < 300$ emu/cc if the recording layer 13 is TM-rich at room temperature, and to a saturation magnetization range of $0 < Ms3 < 160$ emu/cc if the recording layer 13 is RE-rich at room temperature.

Based on the above measurements, magnetooptical recording mediums were arranged to achieve a C/N ratio of 40 dB or higher. Using these magnetooptical recording mediums, magnetic fields required to record information thereon were measured with a linear speed of 10 m/s, a reproducing power of 1.5 mW, a recording frequency of 3 MHz, and a recording power selected to minimize the secondary harmonic from each of the magnetooptical recording mediums.

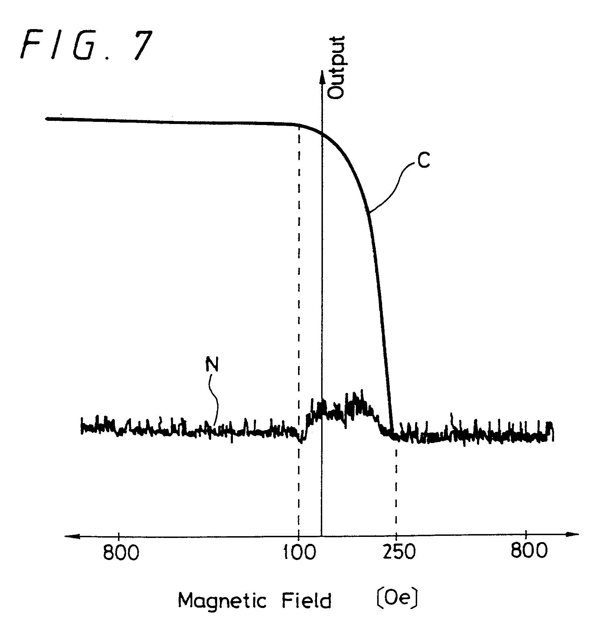

FIG. 7 shows the manner in which the carrier and noise vary when information is recorded while the recording magnetic field is varied. In FIG. 7, the solid-line curve C represents the carrier, whereas the solid-line curve N the noise level. The recording direction is indicated by positive magnetic fields, and the erasing direction is indicated by negative magnetic fields. Even when the applied magnetic field is negative, a magnetic field is exerted in the recording direction due to a counter magnetic field because of the surrounding magnetization, producing a certain carrier level. However, the noise level is also high in the vicinity of the null magnetic field. When a magnetic field of 100 Oe or higher is applied in the recording direction, both the carrier and the noise become stable in level, resulting a good C/N ratio. When a magnetic afield is applied in the erasing direction, no information is written due to an increased level of noise or a stray magnetic field if the magnetic field is 250 Oe or higher, i.e., - 250 Oe or lower in FIG. 7. It follows therefore that the magnetic field required for magnetic-field-modulated recording is of 250 Oe.

The results measured in this manner are shown in Table below. In Table, the saturation magnetization Ms of each layer is indicated as being positive if the layer is TM-rich and negative if the layer is RE-rich. Numerical values of the recording magnetic field represents an upper limit (positive value) of the magnetic field for stable recording information and a lower limit (negative value) of the magnetic field for reliable erasing of information. The magnetic field required for magnetic-field-modulated recording is indicated by the absolute value of each value for reliable erasing of information.

Table

| A \ B | Ms (emu /cc) \ Gd(%) / Tb(%) | 150 / 22.5 | 113 / 23.4 | 75 / 24.3 | 0 / 25.7 | −73 / 27.3 | −120 / 27.7 | −158 / 28.5 |
|---|---|---|---|---|---|---|---|---|
| 83 | 21.5 | (Oe) | | | | | 35~ −100 | |
| −26 | 24.0 | | | 94~ −235 | 12~ −94 | | | |
| −59 | 25.2 | 82~ −196 | 59~ −176 | 42~ −106 | 14~ −87 | 38~ −71 | 47~ −100 | 71~ −71 |
| −90 | 26.8 | 59~ −196 | | 47~ −134 | 12~ −71 | | | |
| −120 | 28.4 | 59~ −100 | | 47~ −82 | 29~ −71 | | 51~ −65 | |
| −137 | 29.3 | | | | 106~ −35 | | | |

A: reproducing layer

B: recording layer

It is possible to select a composition range for allowing a recording magnetic field of 150 Oe or less as indicated by the double border lines in Table above. More specifically, if the reproducing layer 11 is in the vicinity of a compensation composition or RE-rich with Ms1 < 160 emu/cc, then it is possible to suppress the effect of a counter magnetic field at the recording temperature for reducing the recording magnetic field insofar as the saturation magnetization Ms3 of the recording layer 13 at room temperature is less than 100 emu/cc when the recording layer 13 is TM-rich and less than 160 emu/cc when the recording layer 13 is RE-rich, or the recording layer 13 is in the vicinity of a compensation composition.

If the saturation magnetization Ms1 of the reproducing layer 11 at room temperature is in the range of 0 < Ms1 < 150 emu/cc when the reproducing layer 11 is TM-rich, then the effect of a counter magnetic field at the recording temperature can also be reduced insofar as the recording layer 13 is RE-rich with Ms3 < 160 emu/cc and the difference Ms1 - Ms3 between the saturation magnetization Ms1 of the reproducing layer 11 and the saturation magnetization Ms3 of the recording layer 13 is 40 emu/cc or less.

Thus, if the reproducing layer 11 is RE-rich at room temperature or in the vicinity of a compensation composition, then the recording magnetic field can be reduced provided its saturation magnetization is in the above range at room temperature regardless of whether the recording layer 13 is TM-rich or RE-rich. If the reproducing layer 11 is TM-rich at room temperature, then it seems possible to reduce the effect of a counter magnetic field due to magnetization of the reproducing layer 11 when heated up to the recording temperature, thus permitting a recording magnetic field of 150 Oe or less, insofar as the saturation magnetization difference Ms1 - Ms3 between the reproducing layer 11 and the recording layer 13 is 40 emu/cc or less at room temperature.

As described above, the magnetooptical recording medium capable of recording and reproducing information at super-high density according to the present invention can record information based on the present magnetic-field-modulated recording process.

**Claims**

1.  A magnetooptical recording medium comprising:
    a reproducing layer;
    a recording layer; and
    a switching layer interposed between said reproducing layer and said recording layer;
    the arrangement being such that information can be recorded in said recording layer by modulating a magnetic field applied thereto and can be reproduced from said recording layer by varying magnetization of said reproducing layer;
    said reproducing layer being primarily made of GdFeCo and has saturation magnetization Ms1 which is smaller than 150 emu/cc if the reproducing layer is in a transition metal sublattice dominant state at room temperature and smaller than 160 emu/cc if the reproducing layer is in a rare earth sublattice dominant state at room temperature;
    said switching layer being primarily made of TbFeCo and has a Curie temperature ranging from 60°C to 200°C and lower than Curie temperatures of said reproducing and recording layers;
    said recording layer being primarily made of TbFeCo and has saturation magnetization Ms3 which is smaller than 100 emu/cc if the recording layer is in a transition metal sublattice dominant state at room temperature and smaller than 160 emu/cc if the recording layer is in a rare earth sublattice dominant state at room temperature;
    said recording layer being in a rare earth sublattice dominant state when said reproducing layer is in a transition metal sublattice dominant state;
    the difference Ms1 - Ms3 between the saturation magnetization Ms1 of said reproducing layer and the saturation magnetization Ms3 of said recording layer being 40 emu/cc or less.

2.  A magnetooptical recording medium according to claim 1, wherein said switching layer has saturation magnetization Ms2 which is smaller than 300 emu/cc if the switching layer is in a transition metal sublattice dominant state at room temperature and smaller than 160 emu/cc if the switching layer is in a rare earth sublattice dominant state at room temperature.

3.  A magnetooptical recording medium according to claim 1, wherein said reproducing layer has a thickness ranging from 150 Å to 1000 Å.

4.  A magnetooptical recording medium according to claim 1, wherein said switching layer has a thickness ranging from 50 Å to 1000 Å.

5.  A magnetooptical recording medium according to claim 1, wherein said recording layer has a thickness ranging from 200 Å to 1000 Å.

6.  A magnetooptical recording medium according to claim 1, wherein the Curie temperature of said reproducing layer ranges from 200°C to 400°C.

7.  A magnetooptical recording medium according to claim 1, wherein the Curie temperature of said recording layer ranges from 150°C to 250°C.

8.  A magnetooptical recording medium according to claim 1, wherein said reproducing layer has a composition represented by Gdx (Fe85Co15) 100-x with Gd having a content x in the range of $19 \leq x \leq 29$ (atomic %).

9.  A magnetooptical recording medium according to claim 1, wherein said recording layer has a composition represented by Tby (Fe85Co15) 100-y with Tb having a content y in the range of $16 \leq x \leq 30$ (atomic %).

8

# FIG. 1

# FIG. 2

FIG. 3A

FIG. 3B

FIG. 3C

# FIG. 4

# FIG. 5

Content of Gd in Reproducing Layer (at %)

# FIG. 6

FIG. 7